Europäisches Patentamt

European Patent Office

Office européen des brevets

(19)

(11) **EP 1 081 891 A2**

(12) **EUROPEAN PATENT APPLICATION**

(43) Date of publication:
 **07.03.2001 Bulletin 2001/10**

(51) Int Cl.[7]: **H04L 9/32**

(21) Application number: **00307223.8**

(22) Date of filing: **22.08.2000**

(84) Designated Contracting States:
 **AT BE CH CY DE DK ES FI FR GB GR IE IT LI LU MC NL PT SE**
 Designated Extension States:
 **AL LT LV MK RO SI**

(30) Priority: **02.09.1999 US 389157**

(71) Applicant: **Compaq Computer Corporation**
 **Houston Texas 77070 (US)**

(72) Inventors:
 • **Hopkins, Dale Webster**
  **San Jose, California (US)**
 • **McKay, Michael**
  **Benlomond, California (US)**
 • **Langford, Susan**
  **No. 101 Sunnyvale, California (US)**
 • **Hines, Larry**
  **No. 105 Santa Clara, California (US)**

(74) Representative: **Brunner, Michael John**
 **GILL JENNINGS & EVERY**
 **Broadgate House**
 **7 Eldon Street**
 **London EC2M 7LH (GB)**

(54) **Autokey initialization of cryptographic devices**

(57)   In a cryptographic system, a device is manufactured with a secure section that generates an internal secret. An irreversible cryptographic transform of the internal secret is created and a certificate containing the irreversible cryptographic transform and a unique identifier of the device is signed using a manufacturer key. The device and the certificate are provided to a network operator. An initialization process is performed under the control of the operator to set up a secure channel between two devices under the control of the operator for secure communications between the two devices. Because of the internal secrets maintained within each device and the certificates, the devices can authenticate each other and communicate securely, even over an insecure channel, without needing the devices to have been previously programmed with a secret of the operator. The devices can authenticate each other and create a shared secret, all over an insecure channel.

FIG. 4.

EP 1 081 891 A2

**Description**

The present invention relates to cryptographic systems in general and to cryptographic systems that require secure initialization in particular.

Cryptography is used to secure communications and data storage from unwanted access and tampering. Secure communications has several characteristics. One characteristic of secure communications is that a secured message cannot be read by an entity other than the message drafter and the message recipient. Another characteristic of secure communications is that an attacker cannot alter a message in transit from the drafter to the recipient without the recipient being able to detect that the message has been altered. Having a message altered in a detectable way is not so much of a concern, because the recipient can just discard the altered message as being an obvious forgery or a communication error.

Of course, with most realizable secure communications, a message could be rendered readable or alterable with enough time, effort and computing power. Notwithstanding such capability, a message is assumed to be unreadable or unalterable if an attacker could not read or alter the message without either having a decoding key for the message or expending more than a threshold amount of time or computing power "cracking" the message to read its contents or to create an altered message. Typically, secure communications systems are designed so that the threshold amount of time is greater than the length of time the message needs to remain secret and the threshold amount of computing power is much greater than the computing power available to any expected attacker at a cost commensurate with the benefit the attacker would obtain by cracking the message.

In a more general description, a cryptographic system is a system that maintains one or more secrets used to limit the use of a communications or data storage system secured by that cryptographic system. Here, the term "communications system" is used to refer to any system that communicates data from a source to a destination, including those systems not traditionally thought of as communications systems, or transfers data to and from data storage in a secure manner (i.e., securing the "communications" from the data writer to the data reader).

In securing one or more messages, the typical cryptographic system keeps those messages secret and is also used to ensure authentication, integrity and nonrepudiation of messages. Of course, some cryptographic systems might not do all of those functions. For example, one might set up a system where documents are authenticated but the authenticated documents are open for all viewers to see. Authentication allows a recipient to verify that the purported sender of a message is the actual sender; integrity allows recipient to verify that the message received is exactly the message sent and nonrepudiation allows the recipient to prove to the sender, and others, that the message was actually sent by the sender.

In some communications systems designs, the cryptographic functions are isolated in a cryptosystem module so that the sensitive cryptographic operations can be closely controlled. The typical cryptosystem module maintains secrets that are used to encrypt, decrypt and verify messages. These secrets are often referred to as "keys". A key can be used to secure stored data, secure a communications channel, or other similar tasks. Securing data or a communications channel limits the use of the data or the channel to those persons or entities that know the key used to secure access.

Keys have several uses in securing a communications channel. One use is for encrypting and decrypting messages. In such a use, channel used to communicate from a source to a destination is assumed to be insecure in some way. An insecure channel might be subject to an "eavesdropping attack" where an attacker listens to traffic passing from the source to the destination. An insecure channel might also be subject to a "man-in-the-middle" attack where the attacker not only has the ability to listen into the traffic, but is also able to alter the message as it proceeds from the source to the destination. An untrusted channel is a channel that might or might not be secure but that is assumed to be insecure. A security system that is designed for an untrusted channel assumes the channel is insecure in some way, but the security system will operate in the same fashion over a channel that turns out to be secure without the security measures added by the system design.

These attacks can be made considerably more difficult by encrypting the traffic from the source to the destination. With encryption, a plaintext message (i.e., a message readable by anyone in possession of the message) is converted to a ciphertext message using a key such that the ciphertext is not easily converted back to the plaintext message without knowing the key. Encryption is done using an encryption process with the plaintext message and a key as inputs to the process. Preferably, the security of the message does not rely on the attacker being unaware of the details of the encryption process. In better cryptographic systems, it is assumed that the encryption process is entirely known and security is only provided by the key being unknown to the attacker.

The usefulness of each of the above facets of secure communication can be illustrated with reference to a point-of-sale (POS) terminal network. POS terminals in a POS terminal network are used to facilitate a sale between a merchant and customer where the customer authorizes the customer's bank to transfer funds from the customer's bank account to the merchant's bank account to cover a sale. The transaction is effected through one or more messages between the merchant's POS terminal and other network devices. One goal of the POS terminal network is to secure communications, so an eavesdropper or putative thief (generically referred to as an "attacker" in many cryptography texts) cannot read or undetectably modify the message traffic without knowing a message key.

As should be apparent, the parties involved in a sales transaction want the message traffic to have the above aspects of secure communications. The customer wants to ensure that the communication is secret, so that his or her account number is not readable by an attacker. The bank wants to ensure that the communications is authentic so that funds are only withdrawn when duly authorized by the customer. The integrity of the messages needs to be ensured, so that an attacker cannot edit a message to replace the merchant's account number with the attacker's account number. Nonrepudiation is also important for the customer's bank because the bank does not want to be in a position where they have paid the merchant for goods the customer took away from the point of sale but the customer repudiates the transaction and wants the transaction to be backed out of his or her account.

Each of these facets of secure communication can be assured if the bank and the customer take steps to secure communications between the customer and the bank. Since the bank is more likely to be involved in setting up the infrastructure than the customer is, the customer's involvement in security is typically limited to selecting a password (a "key") and keeping the password secret. While the customer's task is a simple matter of memorizing a key, the bank's task is much more complex since there are many opportunities for an attacker to intercede in the communications to make it insecure. The risk is also much greater for the bank than the customer. If a customer's security is breached and an attacker obtains the customer's password, the attacker's take is usually limited to the funds available in that one customer's bank account. The take may be further limited if the customer notices the unauthorized activity in process. However, if the bank's security is compromised, the attackers take is not so limited and is not so noticeable. Because of this, the bank has great interest in having a secure system.

If public key encryption is used, a pair of keys is generated with one of the keys being a private key and the other being a public key. In either case, a secure terminal contains secret keys. If an attacker is able to obtain those secret keys, the attacker may be able to listen in on message traffic to and from the secure terminal and may even be able to intercept the traffic. In some cases, the attacker knowing the secret keys might have enough knowledge to modify a message destined for the secure terminal and modify corresponding messages being sent by the secure terminal so that the attacker could continue to alter later message traffic without detection. Such a compromise could continue even after the secret keys were changed, if the attacker intercepts the messages containing a "change key" command and the new secret keys.

Because of the continuing access, a compromised terminal will remain a compromised terminal. Conversely, a secured terminal will usually be able to remain a secure terminal, if designed properly. Once a secure system is compromised, it cannot be considered a secure system. Therefore, the secure system needs to be secure at every step of implementation, including the first installation of the system. One difficulty with the first installation is that the terminal needs to start with an initial set of secret keys. The initial set of secret keys can be changed remotely, by sending the terminal a secured command message with the new keys and instructions to change the keys. If the terminal is compromised before the "change keys" message is sent, then it is possible that the attacker could read the message and update its copy of the keys, thereby continuing the compromise. In light of the above vulnerabilities of cryptographic systems, the design of an initialization process for cryptographic devices must be done carefully for the devices to be secure.

One solution for device initialization that has been used is to install an initial set of keys during manufacture. A disadvantage of this solution is then the manufacturer would have to keep track of the initial keys for each device and the purchaser of the terminal would have to rely on the manufacturer to keep that information secure. If the initial keys are loaded in the clear, then anyone monitoring the process can capture the keys and compromise the security of the device. Alternatively, the manufacturer might produce the devices so that they all have a common initial key. While the common initial key would allow for initial, unique, key loading secure from casual eavesdroppers, the security of a key common to many devices is doubtful.

Another method of device initialization is the "trusted agent" approach. With this approach, a cryptographic system is manufactured without keys and is initialized by a trusted agent of the owner of the cryptographic system by entering the key into the cryptographic system over a secure channel. If the cryptographic system is located on a remote network connected by insecure connections (such as the global Internet), then the trusted agent would have to travel to the location of the cryptographic system to enter the initialization key. Typically, one employee of an agent is not entirely trusted, so the initialization key will be divided among two trusted employees of the agent, who will each travel to the cryptographic system location to enter their respective portions of the-initialization key. This, of course, is expensive and time-consuming. Furthermore, if dedicated hardware, such as a key entry keyboard is used, it adds to the cost of the device and prevents automated key loading.

The trusted agent approach is currently used for loading the initial keys into new ATM's (automated teller machines) and POS terminals (generically referred to herein as "terminals"). At least two security personnel who provide dual custody of DES key parts supervise the actual loading of keys from a key-loading device to the terminal. This key loading process is particularly burdensome in the case of debit POS terminals, as a typical network may have tens of thousands of such terminals.

To avoid travel to remote locations, a key depot could be used. A key depot is a secure location where all of the cryptographic systems are brought after manufacture. At the key depot, initialization keys are loaded into cryptographic systems over secure channels and the cryptographic systems are then transported to where they will be used. This, in effect trades one expense for another, albeit at some reduction of cost, since maintaining a physical key depot must be maintained and several extra transporting steps are needed.

In a cryptographic system according to one embodiment of the present invention, a device is manufactured with a secure section that generates an internal secret. An irreversible cryptographic transform of the internal secret is created and a certificate containing the irreversible cryptographic transform and a unique identifier of the device is signed using a manufacturer key. The device and the certificate are provided to a network operator. An initialization process is performed under the control of the operator to set up a secure channel between two devices under the control of the operator for secure communications between the two devices. Because of the internal secrets maintained within each device and the certificates, the devices can authenticate each other and communicate securely, even over an insecure channel, without needing the devices to have been previously programmed with a secret of the operator. The devices can authenticate each other and create a shared secret, all over an insecure channel.

A further understanding of the nature and advantages of the inventions herein may be realized by reference to the remaining portions of the specification and the attached drawings.

Fig. 1 is a block diagram of a network interconnecting secured devices.

Fig. 2 is a block diagram of a secured device of Fig. 1 shown in greater detail, including a security module with a secure section.

Fig. 3 is a block diagram of the secure section of Fig. 2 shown in greater detail.

Fig. 4 is a block diagram of a manufacturing initialization facility illustrating a manufacturing initialization process for a device such at those shown in Fig. 1-3.

Fig. 5 is a flowchart of a process of autokey initialization, mutual authentication and shared secret generation as might occur between two devices connected over an untrusted channel.

Fig. 6 is a block diagram of a key server as might be used with the network shown in Fig. 1 to initialize devices coupled to the network using the autokey process.

The present invention has many applications, as will be apparent after reading this disclosure. In describing an embodiment of a security module according to the present invention, only a few of the possible variations are described. Furthermore, in this description, the specific application of a security module is used repeatedly as an example. Other applications and variations will be apparent to one of ordinary skill in the art, so the invention should not be construed as narrowly as the examples, but rather in accordance with the appended claims.

One specific application that is used repeatedly in describing this system is the use of the security modules by a bank to control messages between the bank and its customers. The bank, being protective of its funds and customers, wants to ensure that funds transfer messages, and other communications, are confidential, authentic and intact. Being a strong guardian of its depositors' funds, the bank does not trust the manufacturer, the bank's customers, or the bank's employees not to eavesdrop on message traffic or intercede to modify the traffic to read confidential messages or to cause funds to be transferred from accounts the interceptor has no authority over.

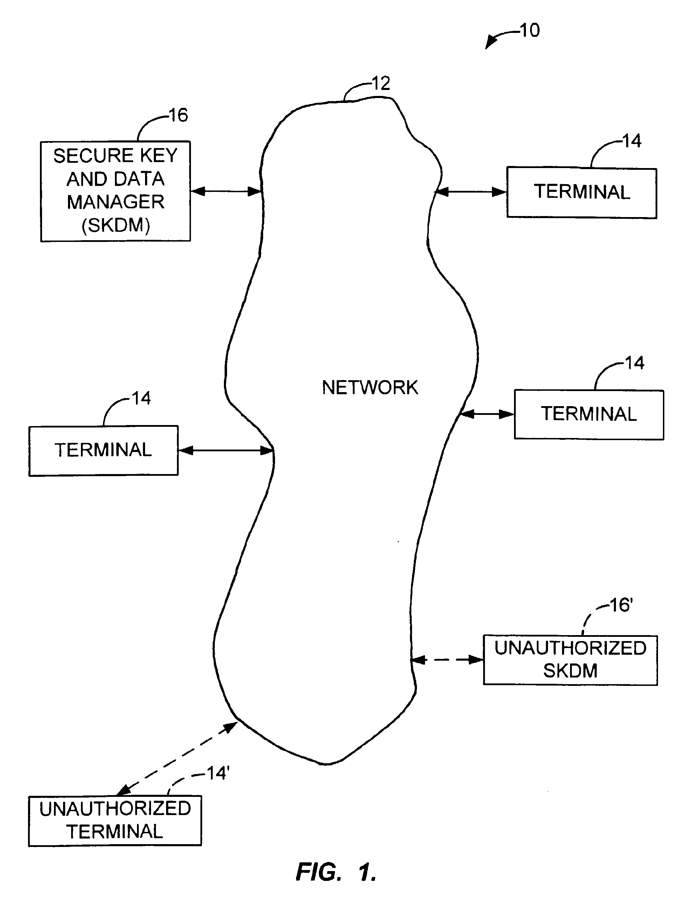

One example of a computer system that might be used by a bank or other security-minded entity is system 10 shown in Fig. 1. In system 10, various devices are interconnected over a network 12. In this description, "manufacturer" is used to describe the entity that creates the device, or its agent or another entity with interests aligned with the manufacturer of the device. "Operator" is used to describe the entity that benefits from the use of the device or its agent, such as a purchaser of the device for installation in a secure network set up over network 12 by the operator to carry the operator's data. Nothing in the present invention requires that the manufacturer and operator be distinct entities, but it is assumed for security purposes that the operator's interests are such that the operator does not necessarily trust the manufacturer.

Network 12 is an untrusted network, but it should be understood that the present invention is not limited to use with an untrusted network. One example of a network that might be used is the global internetwork of networks generally known as "the Internet". The Internet, almost by design, is insecure in that the routing of packets is generally uncontrolled and packets can be routed through many different computer systems unknown to, and uncontrolled by, either the sender or the receiver. That routing allows an attacker with access to the routing components to both eavesdrop and modify data.

The devices shown in Fig. 1 being connected to network 12 include terminals 14 and a secure key and data manager (SKDM) 16, the operation of which is described in detail below. For the purposes of illustration, an unauthorized terminal 14' and an unauthorized SKDM 16' are shown connected to network 12. Although such unauthorized equipment might be easily connected to network 12, as explained below, the architecture and components of the authorized terminals 14 and SKDM 16 will prevent the unauthorized equipment 14', 16' from properly interoperating with the authorized equipment.

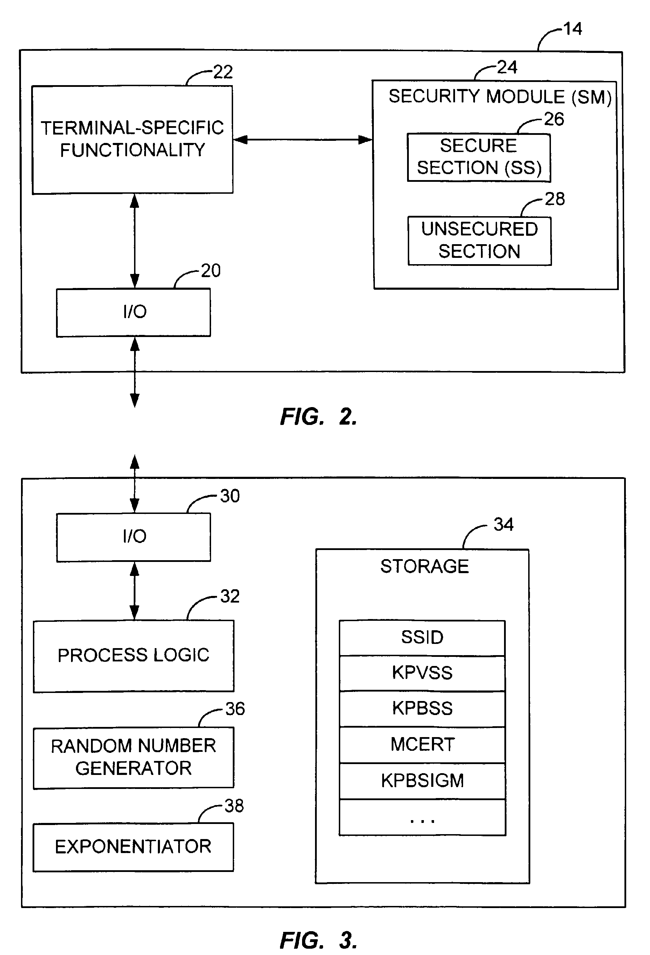

Fig. 2 shows one embodiment of terminal 14 in greater detail. While Fig.. 2 is a block diagram of terminal 14, it should be understood that SKDM 16 could be constructed in a similar manner. Terminal 14 is shown comprising an input/output (I/O) section 20, a terminal-specific logic block 22 and a security module (SM) 24. In a typical setup, the operator of the terminals purchases the terminals from the manufacturer and installs them onto network 12 for use by the operator for some purpose specific to the operator.

Security module 24 is shown comprising a secure section (SS) 26 and an unsecured section 28. A well-designed secure section has several properties common to well-designed secure sections, such as a tamper-resistant boundary. A tamper-resistant boundary makes is difficult for an attacker to get at the internal elements of the secure section without at least leaving clear evidence of a breach, such as a broken wire, an erased memory, or the like. Another property is that the secure section has tamper detection mechanisms to detect when penetration is in progress and erases or destroys secrets before the penetration is complete and the attacker obtains access to the secrets. Furthermore, a well-designed secure section is logically secure, in that no set of signals, data inputs or commands exist that would cause the secure section to release any of the secrets protected within the tamper-resistant boundary.

Unsecured section 28 contains logic and data that supports the operation of security module 24 but that need not be kept secure, such as an I/O interface between SS 26 and the rest of terminal 14. Both secret and nonsecret data elements can be stored in SS 26, but it might be preferred to keep them separate so that any extra logic needed to secure a memory against reading need only secure the secret data elements.

Fig. 3 is a block diagram of SS 26 in further detail. As shown there, SS 26 includes section I/O 30, process logic 32 (such as gates or a microprocessor), storage 34, a random number generator (RNG) 36 and an exponentiator 38. The details of the data stored in storage 34 are described below in connection with various processes performed by SS 26. As is well-known in cryptographic system design, some security operations rely on random numbers and exponentiating values, so an attacker could defeat the security of a system by controlling or observing the random numbers generated by RNG 36 and the exponentiation performed by exponentiator 38. Therefore, a random number generator (RNG) 36 and an exponentiator 38 are preferably secured within the tamper-resistant boundary of SS 26.

The process of putting a terminal into operation will now be described. Since the initialization of terminal-specific logic block 22 depends on the specific use of the terminal and that is outside the scope of this description, the focus is on the initialization of a secure section 26. The initialization of SS 26 is described here in two parts. The first part details the operations that are done by the manufacturer of SS 26, while the second part details the operations that are done by or for the operator of SS 26.

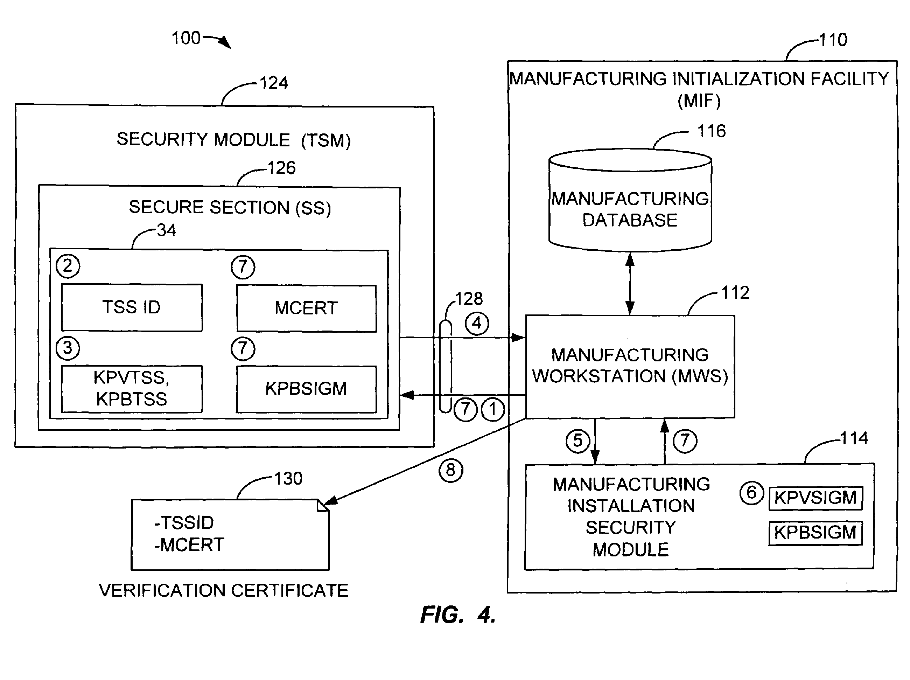

An SS manufacturing process is illustrated in Fig. 4. In the manufacturing environment 100 shown, a manufacturing initialization facility (MIF) 110 comprises a manufacturing workstation (MWS) 112 that is part of MIF 110. MSW 112 is coupled to a manufacturing installation security module (MISM) 114 that is secure within MIF 110. MIF 110 also includes a manufacturing database 116 that contains data about security modules that have be initialized by MIF 110.

A target SM 124 having a target SS 126 is shown coupled to MIF 110 via a link 120. In the process described below, target SM 124 is the SM being initialized. Link 120 need only be secure from data tampering, i.e., data sent from target SS 126 to MWS 112 is received by MWS 112 unaltered and data sent from MWS 112 to target SS 126 is received by target SS 126. Link 120 could also be secure from eavesdropping, but that is not necessary to maintain the overall integrity of the initialization of target SS 126.

Prior to the initialization process, target SS 126 can be generic, i.e., individual target SS's 126 are identical. Target SS 126 becomes nongeneric as a result of the initialization process carried out by MIF 110. The details of one such initialization process are illustrated in the circled numbers in Fig. 4 indicating a set of ordered steps. Corresponding numbers are included in parentheses in the text below near the steps that correspond to the circled numbers.

To start, the MIF generates a serial number, SSID, for the target SS and passes SSID to the target SS (step 1). The target SS stores SSID (2) (in its storage 34; see Fig. 3) and generates a public key pair KSS (3) and stores the key pair in its storage 34. KSS comprises a private part KPVSS and a public part KPBSS. The generation of KSS can be triggered by the receipt of SSID., the receipt of a command from the MIF, or some other suitable trigger. Once the target SS generates KSS, it sends the public part (KPBSS) to the MWS (4). As part of the overall security of the system in which the target SS is installed, the private part KPVSS remains within the target SS and does not ever need to be communicated outside the target SS.

The MSW provides KPBSS and SSID to the MISM, which generates a manufacturer certificate, MCert. The manufacturer certificate contains KPBSS and is signed by an MIF private signature key, KPVSIGM, maintained within the MISM (6). The MISM is initialized with the MIF signature key pair (KPVSIGM, KPBSIGM) before any SS's are initialized by the MIF. The manufacturer certificate might also contain other data elements, such as SSID, the certificate version number, device permissions (for the target SS) and algorithm parameters (to be used by the target SS), the uses of which are described below.

The manufacturer certificate is then passed from the MISM to the target SS for storage at in the target SS (7), along with the MIF's public signature key, KPBSIGM, which is also stored within the target SS. The MIF also generates a verification certificate 130 containing SSID and a copy of MCert (8).

At this point, the target SS is a duly manufactured device. It is nongeneric, in that it has a specific identifier (SSID), but it is typically not specific to the eventual operator that will use the target SS. However, the target SS could be specific to an operator by using a different MIF signature key pair (KPVSIGM, KPBSIGM) for each operator. Either way, the target SS preferably does not contain any operator secrets at this point. What follows is a description of an initialization process that configures a device to be specific to the network that the operator has set up.

When the target SS is provided to the operator, that operator is provided with the verification certificate 130 that goes with the target SS. The verification certificate need not be a secured certificate itself, but it is preferably provided under separate cover to the operator. The verification certificate allows the operator to verify that the target SS delivered under separate cover has a given unique identifier (SSID) and has been properly initialized by the manufacturer. The operator can then install the target SS as an SS into an SM 24. Alternatively, the manufacturer could provide the SS already installed in an SM 24 or even provide the SS in an SM 24 already installed in terminal 14 or SKDM 16.

Once the operator obtains the target SS, the operator connects it to network 12 (which is possibly insecure). The operator typically will run one or more SKDM's on network 12 and the first action taken with an SS is to load operator secrets, such as key loading keys and key change keys, into the SS from the SKDM. One of the security concerns of the operator is that the SKDM not load keys into unauthorized terminal 14' and that an SS not accept commands and keys from an unauthorized SKDM 16'. Therefore, the SS and the SKDM should authenticate each other before transferring any operator secrets or data that could be used to compromise operator secrets.

In the operator initialization (the second part of the initialization process), an SS and an SKDM (or two SS's for that matter) connect over an untrusted channel. Note that this process can be done with the devices connected over an insecure network in which data can be both observed and modified, and the process can be done without any prior installation of an operator secret in the device.

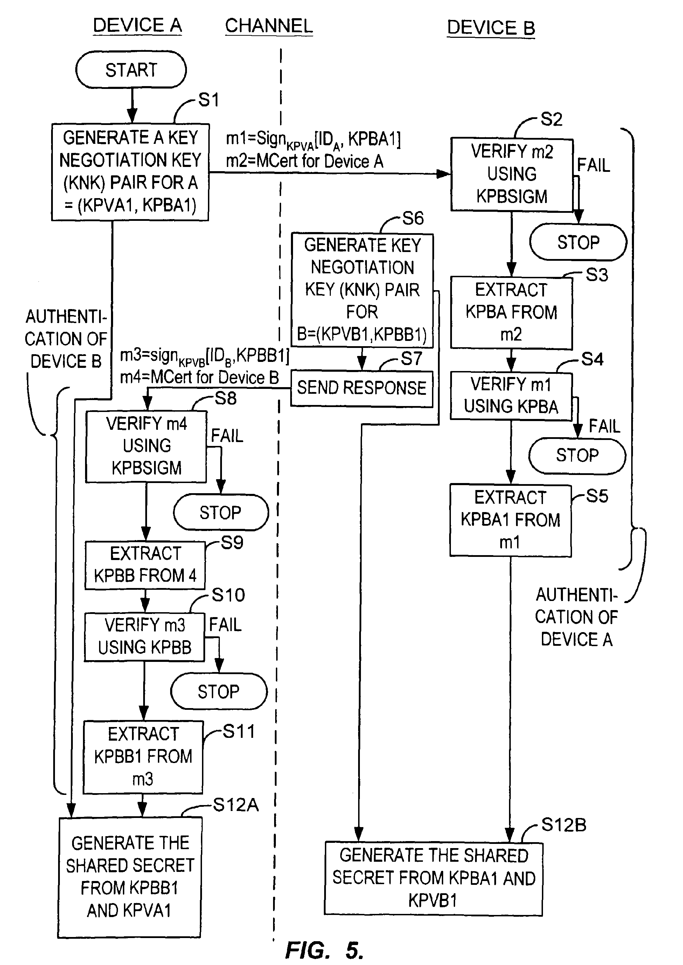

One example of a specific mutual authentication process that might be used between two devices operated by the operator is shown in the flowchart of Fig. 5. Other variations of the process shown in Fig. 5 will be apparent to those of skill in the art from this description. The steps of the flowchart of Fig. 5 are numbered beginning with step S 1 and those numbers are used in the text below, parenthetically. Generally, the steps are performed in the numbered order, but one of skill in the art will note from this description that the order of the steps can vary where a larger numbered one step does not require that a smaller numbered step be done before the larger numbered step.

The process described in Fig. 5 authenticates two devices, device A and device B, to each other and results in a shared secret known only to device A and device B. Of course, with enough computing power or time, the shared secret could be obtained by an attacker, so the design of the system should be such that the amount of computing power or time is high enough to make an attack not worth the effort. One advantage of the process described below is that the generation of a shared secret is intertwined with the mutual authentication process. Another advantage of the process described below is that the mutual authentication process can be done without requiring a central certificate authority and a certificate chain between two devices.

Device A could be terminal 14 or SKDM 16 (or more precisely, the SM 24 of one of those devices). Device B could also be terminal 14 or SKDM 16. For example, device A and B could be a terminal and an SKDM, respectively, or both devices could be terminals.

The process begins with device A generating a key negotiation key (KNK) pair (KPVA1, KPBA1) for authentication (step S1). Following the manufacturing process described above, device A contained several data elements, such as a unique identifier (labeled IDA in Fig. 5), an internal secret KPVA and a manufacturer certificate for device A (MCert$_A$). Note that the internal secret KPVA was created within the secure section of device A and never needed to be disclosed outside that secure section, even to the manufacturer. Device A creates two messages, M1 and M2, and sends those messages to device B. Message M1 contains IDA and KPBA1, signed by KPVA.

Once device B receives M1 and M2, device B verifies M2 using KPBSIGM, the manufacturer public signing key (S2). If M2 does not verify, device B stops the process and assumes that device A is an unauthorized device. Device B then extracts KPBA from M2 (S3). KPBA is the public part of the key of which KPVA is the private part. As explained above, that public part was included in the manufacturer certificate. At this point, device B is reasonably assured that KPBA is in fact the public part of the key, because the manufacturer certified it.

At step S4, device B verifies M1 using KPBA. If M1 does not verify, device B stops the process and assumes that device A is an unauthorized device. If M1 does verify, device B extracts KPBA1 from M1 (S5). At this point, device B has authenticated device A. The process of device A authenticating device B involves steps S6 through S11. It should be noted that steps S1 through S5 need not happen in any particular order relative to steps S6 through S11. However, if it is desirable to have M3 and M4 be secrets passed from device B to device A, device B can perform enough of the steps to generate the shared secret at least at device B.

At step S6, device B generates its own key pair (KPVB1, KPBB1) for authentication. As with device A, a duly manufactured device B also contains several data elements. Those data elements in device B include a unique identifier (labeled ID$_B$ in Fig. 5), an internal secret KPVB and a manufacturer certificate for device B (MCert$_B$). The internal secret KPVB was created within the secure section of device B and never needed to be disclosed outside that secure section. KPVB 1 is used in a later step to generate the shared secret. Device B creates two messages, M3 and M4, and sends those messages to device A (S7). Message M3 contains $ID_B$ and KPBB1, signed by KPVB. Once device A receives M3 and M4, device A verifies-M4 using KPBSIGM, the manufacturer public signing key (S8). If M4 does not verify, device A stops the process and assumes that device B is an unauthorized device. Device A then extracts KPBB from M4 (S9). KPBB is the public part of the key of which KPVB is the private part, which is included in $MCert_B$. At this point, device A is reasonably assured that KPBB is in fact the public part of the key, because the manufacturer certified it.

At step S10, device A verifies M3 using KPBB. If M3 does not verify, device A stops the process and assumes that device B is an unauthorized device. If M3 does verify, device A extracts KPBB1 from M3 (S11). At this point, device A has authenticated device B and device B has authenticated device A. Furthermore, at this point, device A ontains KPVA1 and KPBB1 and device B contains KPVB1 and KPBA1. With each of these two values, each device can generate the shared secret. Once each device generates the shared secret, the two devices can communicate between themselves securely, by using the shared secret (S12A, S12B). One method of generating such a shared secret is described below, but other methods could be used to generate the shared secret. In some systems, it may be preferred to generate a shared secret that does not rely on the security of KPBSIGM, so that the operator's system is not compromised after a compromise of KPBSIGM.

One method of generating a shared secret is a Diffee-Hellman (DH) exchange. A DH exchange uses two variables, $\alpha$ and $n$, that may or may not be secret and where $\alpha < n$. Device A generates its key pair such that KPBA1 $= \alpha^{KPVA1}$ mod $n$ and device B generates its key pair such that KPBB1 $= \alpha^{KPVB1}$ mod $n$. Once device A extracts KPBB1 from M3, device A can calculate $Y_A$ = KPBB1$^{KPVA1}$ mod $n$ and once device B extracts KPBA1 from MI, device B can calculate $Y_B$ = KPBA1$^{KPVB1}$ mod $n$. However, because of the way those values were generated:

$$
\begin{aligned}
Y_A &= \text{KPBB1}^{KPVA1} \cdot \text{mod } n \\
&= (\alpha^{KPVB1})^{KPVA1} \text{ mod } n \\
&= (\alpha^{KPVA1})^{KPVB1} \text{ mod } n \\
&= \text{KPBA1}^{KPVB1} \text{ mod } n \\
&= Y_B
\end{aligned}
$$

and therefore, since $Y_A = Y_B$, and performing discrete logarithms is difficult, devices A and B have a shared secret. In a particular embodiment, n is a large prime number (on the order of 1024 bits) and $\alpha$ is an element of a finite field having $2^q$ elements where $q$ is a 160-bit prime that divides $n$-1 and $\alpha$. If $Y = Y_A = Y_B$ is one the order of 1024 bits, several keys can be created from Y, such as 56-bit DES keys. There are many different uses for the shared secret once it is created.

Fig. 3 shows some details of the data values stored in storage 34. In a more detailed implementation, storage 34 contains storage for the elements shown in Table 1.

TABLE 1.

| Element | Description |
|---|---|
| Version Number | The version of the protocol used by the terminal to set up secure channels and/or exchange keys. |
| SSID | A manufacturer assigned value unique to a specific terminal/target SS. |
| Permissions Flags | Flags indicating which actions are allowed. |
| Key Loading Type | The type of key loading that occurs in the initial autokey loading process. Examples: key exchange key, temporary superkey, terminal key loading key. |
| KSS | Key pair for the terminal (KPVSS, KPBSS). |
| KPBSIGM | Public portion of manufacturer's signature key. |

TABLE 1. (continued)

| Element | Description |
|---|---|
| MCert | Manufacturer Certificate: a signature of KSS using the manufacturer key specific to the operator of the target SS. The data signed includes the Version Number, SSID, Permission Flags and KSS. |
| CD | Check Digits. |

If the permissions flags are included in MCert, then a terminal cannot change its permissions once they are assigned by the MIF. The permissions flags might be set by the manufacturer to limit the functions that can be performed by the terminal as requested by the operator. The permissions flags might, for example, indicate:

a. If MFKs can be shared among multiple security modules
b. If the terminal is allowed to load other MFKs
c. Load terminals with application programs.
d. If the terminal is allowed to load key exchange keys (KEKs).
e. If the terminal is allowed to load specific terminal keys.
f. If DSA signatures are to be verified.

The specific purpose of a terminal 14 is not the main aspect of this disclosure, but terminal 14 might be a point-of-sale (POS) terminal used to gather purchaser information or effect an electronic transaction, an automatic teller machine ("ATM"), a smart card reader or the like. In some cases, terminal 14 might be manufactured without security module 24 for some specific purpose and the security module, manufactured by the terminal manufacturer or a separate security module manufacturer, added later. For example, an ATM can be manufactured with logic specific to an ATM, but without a security module. A security module that is not specific to an ATM can then be added to the ATM.

In another example, the terminals are personal computers and the security modules are PCI bus cards installed in the personal computers. Where the personal computers and security modules are manufactured by one company, the personal computers can be shipped with the security modules preinstalled. Because of the initialization done at manufacture, the personal computers do not have to be manufactured specific to an operator, which simplifies the process of providing the personal computers to operators.

A large organization might use tens of thousands of personal computers, all of which require a security module installed therein so that the personal computers can intercommunicate securely over an insecure network. Without security modules as described above, the organization would either need to have the security modules specifically preconfigured specifically for the organization including secrets of the organization, such as master file keys, or the organization would need to have an infrastructure for securely transporting those organization secrets to the point of installation of the personal computers. However, with the above-described security modules, the organization can centrally manage its own keys and distribute them over an untrusted channel, preferably in a manner transparent to the end user of the personal computer within the organization. The end user might need only to run an initialization routine, which would then activate the security module to perform the mutual authentication process described in Fig. 5 and then obtain keys for operation from a key server.

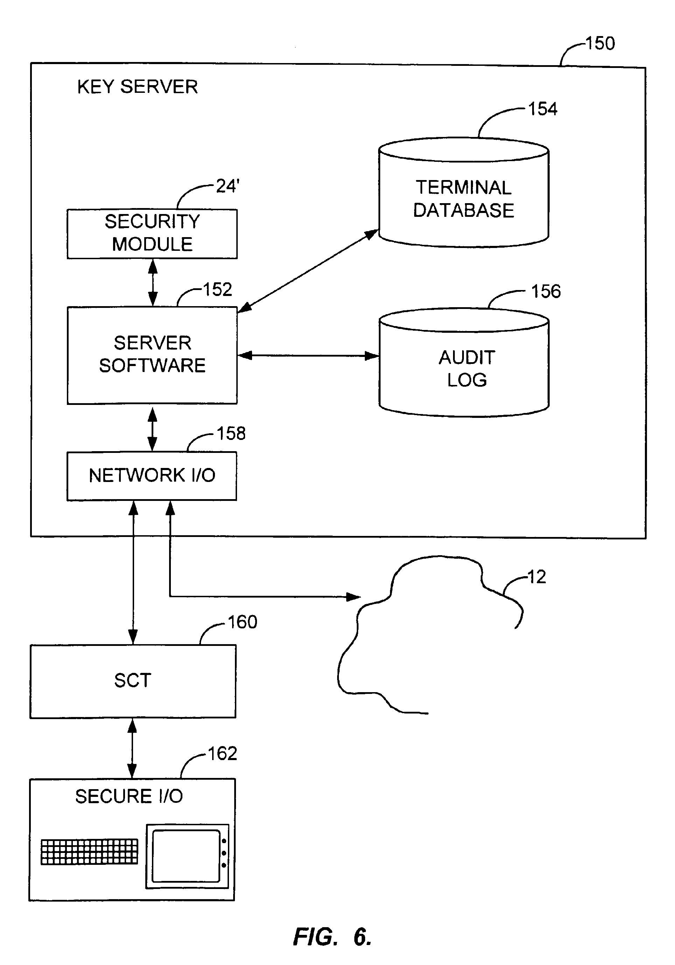

Fig. 6 illustrates a key server 150 as might be connected to an untrusted network to load keys into a generic device to make the device specific to an operator. In one implementation, key server 150 is a Windows NT server in a secure physical environment. Key server 150 is shown comprising server software 152, a terminal database 154, an audit log 156 and network I/O 158. Network I/O 158 connects key server 150 to untrusted network 12 we well as connecting key server 150 to a security control terminal (SCT) 160 over a secured connection. As shown, SCT 160 has an interface to a user via secured I/O 162.

Terminal database 154 maintains a list of the serial numbers (SSID's) for each secure section used by the operator, as well as the MCerts for each of the secure sections. As the operator brings more terminals on line, the operator can add the SSID and MCert for each new terminal into terminal database 154.

Cryptographic operations within key server 150 are performed by the security module 24' within key server 150. More than one security module 24' might be used within key server 150, if that key server is managing more than one subnetwork. Security module 24' can be the same as security module 24 described above, but for some key servers, the autokeying capability is not needed. Instead, the initial keys for the key server are loaded manually over a secure connection. One such secure connection is that provided by SCT 160, which is able to load master file keys (MFK's) and read data from the secure section in a secure manner.

In the manner described above, a terminal and a key server, or two terminals, can connect securely over an insecure channel, where neither data integrity nor data confidentiality is assured, and securely pass messages and verify the authority of the other party to a conversation. This allows two terminals to communicate messages between themselves, set up shared secrets, or to coordinate secure loading of keys over the insecure channel. For example, once the process shown in Fig. 5 is complete, the key server can securely transmit a new set of keys or a "key change" command to an SS and that SS can verify that the key server is what it claims to be before changing keys.

To prevent someone from undetectably inserting an unauthorized device into a network and having it verified by a key server, the key server maintains audit log 156 of the terminals with which the key server has performed. A record in audit log 156 contains the manufacturer-generated ID for the terminal (SSID) and a sequential record number. The sequential record numbers make deletions of records from audit log 156 apparent. The records can be signed to prevent alteration.

A system for loading an initial set of one or more keys without needing a secure channel to load the initial set of keys has now been described. With this system, secure sections can be securely initialized and authenticated over insecure networks.

The above description is illustrative and not restrictive. Many variations of the invention will become apparent to those of skill in the art upon review of this disclosure. The scope of the invention should, therefore, be determined not with reference to the'above description, but instead should be determined with reference to the appended claims along with their full scope of equivalents.

**Claims**

1. A method of manufacturing a device for use by an operator for communicating with other devices operated for the operator, wherein a manufacturer has a manufacturer key that is normally unavailable to others besides the manufacturer and its authorized agents and the communication is over an untrusted channel that is not assumed to be secure from eavesdropping or message modification, the method comprising the steps of:

   manufacturing the device to include a secure section such that the secure section need not contain a secret of the operator, the secure section being circuitry that is enclosed within a tamper-resistant boundary;
   initializing the device with a device identifier unique to that device;
   triggering the secure section to generate an internal secret;
   creating, within the secure section, an irreversible cryptographic transform of the internal secret;
   outputting, from the device, the irreversible cryptographic transform as a public part of the internal secret; and
   generating a digital signature of the public part and the device identifier using the manufacturer key.

2. The method of claim 1, wherein each device is manufactured as a generic device not specific to a particular operator or network onto which the device may be connected.

3. The method of claim 1, further comprising a step of certifying the device as being a properly manufactured device.

4. The method of claim 1, wherein the step of creating the irreversible cryptographic transform comprises a step of generating a public key pair where the public part of the internal secret is a public key portion of the public key pair.

5. Using a device having an internal secret for which a digital signature of a public part of the internal secret and a unique device identifier using the manufacturer key exists, a method of setting up a secure channel between the device and a key server over an untrusted channel, the method comprising the steps of:

   authenticating the key server to the device;
   authenticating the device to the key server by requiring the device to provide a response to a challenge where the response is such that only a device knowing the internal secret could feasibly generate the response;
   creating a shared secret shared by the key server and the device using information provided by the key server and the device in the steps of authenticating; and .
   using the shared secret for secure communications over the channel.

6. The method of claim 5, wherein the step of using the shared secret comprises at least one of transferring data between the key server and the device, transferring a key between the key server and the device, setting a configuration value in the device, or reading configuration values from the device.

7. A method of loading a key into a target device from a key server over an untrusted channel between the target device, and the key server, wherein the initial contents of the target device are assumed to be determinable by an untrusted entity, the method comprising the steps of:

generating, within a secure circuit of the target device, a session key that is a function of at least one variable whose value cannot be determined in advance of the step of generating;
using the session key in configuring a secured channel over the untrusted channel; and
loading at least one key from the key server to the target device using the secured channel.

8. The method of claim 7, wherein the target device is a newly manufactured terminal to be added to a secure network and the target device is assumed to contain no secrets.

9. A secure key loading system for securely loading keys from a key server to a target device over an untrusted channel, the secure key loading system comprising:

a secure chip within target device, the secure chip comprising:

(a) a random number generator;
(b) an exponentiator; and
(c) logic to generate a secret session key from an output of the random number generator and the exponentiator such that the secret session key cannot be easily generated from knowledge of the logic and its manufactured state; and

key server logic, within the key server, for decoding messages received by the target device encoded with the secret session key and for using the decoded messages to initiate a secure channel over the untrusted channel.

10. A method of initializing a security device with an initialization key over an untrusted channel, comprising the steps of:

generating a secret within a secured section of the security device constructed from hardware which is not known to be secret; and
using the generated secret to communicate securely between the security device and an external node.

11. The method of claim 10, where the external node is a node associated with a key server, the method further comprising a step of loading at least one key into the security device from the key server using a secure communications channel established using the generated secret key.

**FIG. 1.**

**FIG. 2.**

**FIG. 3.**

FIG. 4.

**FIG. 5.**

DEVICE A | CHANNEL | DEVICE B

START

S1

GENERATE A KEY NEGOTIATION KEY (KNK) PAIR FOR A = (KPVA1, KPBA1)

m1=Sign$_{KPVA}$[ID$_A$, KPBA1]
m2=MCert for Device A

S2

VERIFY m2 USING KPBSIGM — FAIL → STOP

S3

EXTRACT KPBA FROM m2

S6

GENERATE KEY NEGOTIATION KEY (KNK) PAIR FOR B=(KPVB1,KPBB1)

S4

VERIFY m1 USING KPBA — FAIL → STOP

AUTHENTICATION OF DEVICE B

m3=sign$_{KPVB}$[ID$_B$,KPBB1]
m4=MCert for Device B

S7

SEND RESPONSE

S5

EXTRACT KPBA1 FROM m1

AUTHENTICATION OF DEVICE A

S8

VERIFY m4 USING KPBSIGM — FAIL → STOP

S9

EXTRACT KPBB FROM 4

S10

VERIFY m3 USING KPBB — FAIL → STOP

S11

EXTRACT KPBB1 FROM m3

S12A

GENERATE THE SHARED SECRET FROM KPBB1 AND KPVA1

S12B

GENERATE THE SHARED SECRET FROM KPBA1 AND KPVB1

14

**FIG. 6.**